# EUROPÄISCHE PATENTSCHRIFT

(11) **EP 0 683 362 B1**
(45) Veröffentlichungstag und Bekanntmachung des Hinweises auf die Patenterteilung: **14.01.1998**
(21) Anmeldenummer: 95106882.4
(22) Anmeldetag: 06.05.1995
(51) Int. Cl.: F24H 9/12, F24D 11/00, F28D 20/00

(54) **Wärmespeicher**
Heat accumulator
Accumulateur de chaleur

(30) Priorität: 17.05.1994 DE 4417138
(43) Veröffentlichungstag der Anmeldung: 22.11.1995
(73) Patentinhaber: Kruck, Alfons, D-85072 Eichstätt (DE)
(72) Erfinder: Kruck, Alfons, D-85072 Eichstätt (DE)
(74) Vertreter: Neubauer, Hans-Jürgen, Dipl.-Phys.

(56) Entgegenhaltungen:
- WO-A-80/01714
- DE-A- 2 703 460

## Beschreibung

Die Erfindung betrifft einen Wärmespeicher als Warmwasserschichtspeicher, insbesondere für eine Raumheizung nach dem Oberbegriff des Anspruchs 1.

Ein bekannter Warmwasserschichtspeicher (DE 38 35 096 C2) besteht aus einem aufrechten Speicherbehälter, bei dem ein oberer Zuführungsstutzen für warmes Wasser mit einem langgestreckten, unten offenen, inneren Leitrohr verbunden ist, das von einem im Durchmesser größeren, äußeren Leitrohr umgeben ist. Das äußere Leitrohr überragt in seiner Länge das innere Leitrohr. Der Ringraum zwischen den beiden Leitrohren steht über öffnungen mit einem oberen Bereich des Speicherbehälters in Verbindung. Diese Anordnung soll eine weitgehend turbulenzfreie, gleichmäßige Schichtung des Wassers mit vertikalem Temperaturgefälle ermöglichen. Wegen der Entnahme von warmem Wasser und Zuführung von kaltem Wasser direkt in den Speicherbehälter wird durch Strömungen und Turbulenzen das gleichmäßige vertikale Temperaturgefälle nachteilig gestört.

Ein weiter bekannter Warmwasserschichtspeicher (DE 41 19 542 C1) besteht aus einem aufrechten Speicherbehälter mit einem zentralen, vertikal angeordneten Leitrohr, das an seinem oberen Ende mit einem Auslaß in den Speicherbehälter mündet. In dem Leitrohr ist ein Einspeiserohr für warmes Wasser angeordnet, das mit seiner Öffnung bis in einen mittleren Bereich des Speicherbehälters reicht. Im Einspeiserohr sind Durchströmöffnungen zum Speicherbehältervolumen angebracht, die sich nur unterhalb der Einspeisestelle befinden. Auch diese Anordnung soll eine Wasserschichtung mit gleichmäßigem vertikalen Temperaturgefälle bewirken. Da aber auch hier Zuführungen und Entnahmen direkt aus dem Speicherbehältervolumen erfolgen, wird ein gleichmäßiges vertikales Temperaturgefälle durch Turbulenzen und Strömungen gestört.

In einem weiter bekannten Warmwasserschichtspeicher (EP 0 561 032 Al) sind durch den Speicherbehälter im oberen Bereich je ein Vorlaufrohr und ein Rücklaufrohr mit Durchströmöffnungen geführt. Darunter sind Schichtbleche mit Durchströmöffnungen angeordnet, die zu einer gleichmäßigen Speicherschichtung mit einem gleichmäßigen vertikalen Temperaturgefälle führen. Durch die Anordnung des Vorlaufrohrs und des Rücklaufrohrs mit Durchströmöffnungen ist eine selbsttätige Einbindung des Warmwasserschichtspeichers in einen Heizkreislauf, abhängig vom Energieverbrauch, möglich. Auch diese Anordnung ist hinsichtlich eines kostengünstigen, einfachen Aufbaus und einer Optimierung der Speicherwirkung verbesserungsfähig.

Aufgabe der Erfindung ist es einen gattungsgemäßen Wärmespeicher so weiterzubilden, daß eine verbesserte Ausnützung der Heizenergie möglich wird.

Diese Aufgabe wird mit den Merkmalen des Anspruchs 1 gelöst.

Gemäß Anspruch 1 besteht der Schichteinsatz aus einer Vorlaufkammer und einer Rücklaufkammer. Die Vorlaufkammer besteht aus einer rohrförmigen Vorlauf-Einströmkammer und einer diese umgebende Vorlauf-Beruhigungskammer. Die Vorlaufkammer ist etwa vertikal im Speicherbehälter angeordnet. Als Durchströmverbindung zur Vorlauf-Beruhigungskammer ist wenigstens eine vertikale Reihe von Vorlauf-Einströmkammer-Öffnungen in einem schmalen, vertikalen Längsbereich der Vorlauf-Einströmkammer vorgesehen. Weiter ist wenigstens eine vertikale Reihe von Vorlauf-Beruhigungskammer-Öffnungen in einem schmalen Längsbereich etwa gegenüberliegend zu den Vorlauf-Einströmkammer-Öffnungen vorgesehen als Durchströmverbindung zum Speicherbehältervolumen. Der Vorlauf-Eingang und der Vorlauf-Ausgang sind jeweils als geschlossenes Rohr in die Vorlauf-Einströmkammer geführt. In einer konkreten Ausführung sind in der Regel mehrere Vorlauf-Eingänge und Vorlauf-Ausgänge vorzusehen, die an Öffnungen in der Wand der Vorlauf-Einströmkammer angeschlossen sind.

Die Rücklaufkammer ist entsprechend der Vorlaufkammer ausgebildet.

Mit der vorliegenden Ausbildung des Schichteinsatzes wird sowohl für den Vorlauf als auch für den Rücklauf eine weitgehende Strömungsberuhigung und gute, temperaturabhängige Schichtung im Speicherbehältervolumen erreicht. Der Grund dafür besteht einerseits darin, daß keine direkte Zuführung oder Entnahme zum Speicherbehältervolumen erfolgt, sondern sowohl für den Vorlauf als auch für den Rücklauf Wasser in die innerste Einströmkammer zugeführt oder von dieser entnommen wird. Zudem wird für die Strömung aus der Einströmkammer in die Beruhigungskammer durch die gegenüberliegende Lage der Durchströmverbindungen eine Strömungsumlenkung um 180° erzwungen, die ebenfalls zu einer Strömungsberuhigung beiträgt. Diese Anordnung ist insbesondere für angeschlossene Kessel und Heizkreise einer Raumheizung vorgesehen, wo relativ hohe Volumendurchsätze erforderlich sind. Durch die gute Funktion des Wärmespeichers wird Heizenergie gut ausgenützt. Zudem ist der Aufbau des Schichteinsatzes einfach und die Herstellung kostengünstig durchführbar.

Gemäß Anspruch 2 ist die Vorlauf-Beruhigungskammer an ihrer Unterseite durch einen Boden geschlossen und an ihrer Oberseite offen. Die Vorlauf-Einströmkammer ist dagegen an ihrer Oberseite geschlossen und endet in einem Abstand zu dem Boden der Vorlaufberuhigungskammer und ist zudem an ihrer Unterseite offen. Durch die untere große Öffnung an der Vorlauf-Einströmkammer kann beim Einströmen von warmem Wasser Druck abgebaut werden, ohne daß das warme Wasser, das durch Konvektion nach oben steigt, nach unten ausströmt.

Mit Anspruch 3 wird eine Anordnung entsprechend Anspruch 2 auch für die Rücklaufkammern vorgeschlagen, wobei allerdings die Verhältnisse wegen des kälteren Wassers im Rücklauf von oben nach unten zu vertauschen sind.

Für eine optimierte Schichtung ist es nach Anspruch 4 vorteilhaft, daß sich die Durchströmöffnungen an der Vorlauf-Einströmkammer und Vorlauf-Ausströmkammer sowie an der Rücklauf-Einströmkammer und Rücklauf-Ausströmkammer über deren gesamte Höhe erstrecken. Als zweckmäßig hat sich eine Lochreihe mit Lochabständen von ca. 80 bis 100 mm und Lochdurchmessern von 35 bis 40 mm erwiesen. Die Dimmensionierung und Auslegung soll für eine gute Funktion allgemein so durchgeführt werden, daß die Strömungsgeschwindigkeit an keiner Stelle den Wert von 0,02 m/sec übersteigt.

Vorteilhaft erstrecken sich die Vorlaufkammer und Rücklaufkammer nach Anspruch 5 über weitgehend die gesamte Höhe des Speicherbehälters, so daß über die Durchströmöffnungen eine über die gesamte Höhe gleichmäßige, temperaturgeschichtete Einlagerung von Wasser möglich ist. Geringe Abstände zum Boden und zur Decke des Speicherbehälters sind für eine gute Funktion unschädlich und können insbesondere aus konstruktiven Gründen vorgesehen werden.

In einer besonders bevorzugten Ausführungsform nach Anspruch 6 liegen ein Vorlauf-Eingang und ein Vorlauf-Ausgang und entsprechend ein Rücklauf-Eingang und ein Rücklauf-Ausgang an der jeweiligen Einströmkammer direkt gegenüber. Diese Anschlüsse sind insbesondere zum Anschluß des Vor- und Rücklaufs eines Heizkessels und von Heizelementen, wie Heizkörper oder Fußbodenheizungen, vorgesehen. Bei einem hohen Energiebedarf wird über eine entsprechende Pumpensteuerung eine hohe Strömung im Heizkreis erzeugt. Durch die an den Einströmkammern direkt gegenüberliegenden Anschlüsse für den Vorlauf-Eingang und Vorlauf-Ausgang bzw. Rücklauf-Eingang und Rücklauf-Ausgang erfolgt praktisch ein Strömungskurzschluß durch die jeweilige Einströmkammer hindurch, so daß dabei in gewünschter Weise der Wärmespeicher vom Heizkreis weitgehend selbsttätig abgekoppelt ist. Bei weniger Energiebedarf wird durch Steuerelemente die Strömung gedrosselt, wodurch sich wegen der geringeren Strömung in den Einströmkammern Wasser im Wärmespeicher durch Konvektion wieder verteilen kann.

Die im Zusammenhang mit Anspruch 6 geschilderte Maßnahme wird durch die Merkmale des Anspruchs 7 weiter verbessert, wobei der gegenüberliegende Vorlauf-Eingang und Vorlauf-Ausgang in einem oberen Bereich der Vorlaufkammer angeordnet sind und der gegenüberliegende Rücklauf-Eingang und Rücklauf-Ausgang in einem mittleren Bereich liegen. Zudem ist ein weiterer Rücklauf-Ausgang in einem unteren Bereich angeordnet. Der Rücklauf-Ausgang kann über eine Steuerung von dem oberen Anschluß auf den unteren Anschluß umgeschaltet werden.

Bei einem eingeschalteten Heizkessel wird ein hoher Energieverbrauch bzw. Energiebedarf in den angeschlossenen Heizkreisen über einen großen Volumenstrom des Heizwassers in den Heizkreisen und/oder eine geringe Rücklauftemperatur von den Heizkreisen erfaßt. In diesem Betriebszustand ist das Umschaltventil auf den oberen Rücklauf-Ausgang geschaltet, wodurch die Energiezufuhr zu den Heizkreisen im wesentlichen direkt durch die Anschlüsse am gegenüberliegenden Vorlauf-Eingang und Vorlauf-Ausgang sowie am gegenüberliegenden Rücklauf-Eingang und Rücklauf-Ausgang erfolgt, ohne daß die Wärmespeicherfunktion wesentlich berührt wird. Somit ist sichergestellt, daß die Verbraucher in den Heizkreisen vorrangig versorgt werden.

Bei einem geringeren Energieverbrauch bzw. Energiebedarf in den Heizkreisen wird beispielsweise durch Schließen der Mischventile oder der Raumthermostatventile ein geringerer Volumenstrom und/oder eine geringere Rücklauftemperatur in den Heizkreisen erfaßt. Der Volumenstrom des Kesselkreises bleibt jedoch weitgehend konstant. Durch diese geänderten und geringeren Volumenstromverhältnisse erfolgt ein hydraulischer Ausgleich im Wärmespeicher, wodurch Energie abgespeichert wird. Für eine solche Speicherung der Energie wird das Umschaltventil durch die Steuerung auf den unteren Rücklauf-Ausgang geschaltet, wodurch insbesondere der untere Bereich für eine Temperaturschichtung durchströmt wird. Wenn ein bestimmter, voller Ladezustand des Wärmespeichers erfaßt wird, schaltet die Steuerung den Heizkessel ab. Zweckmäßig läuft dann noch die Kesselkreispumpe für wenige Minuten nach, um Restwärme des Kessels abzubauen. Die angeschlossenen Heizkreise können nun Heizwasser aus dem Speicherbehälter entnehmen. Ist der Ladezustand des Wärmespeichers auf einen unteren bestimmten Wert abgefallen, wird ein angeschlossener Heizkessel wieder eingeschaltet und das Umschaltventil auf den oberen Rücklauf-Ausgang geschaltet.

Nach Anspruch 8 können direkte Verbindungen zum Wärmespeichervolumen über den Boden der Vorlauf-Beruhigungskammer bzw. den Deckel der Rücklauf-Beruhigungskammer hergestellt sein. Der obere Anschluß am Deckel der Rücklauf-Beruhigungskammer ist bevorzugt als Ausgangsleitung für einen Warmwasserverbraucher zu verwenden, wobei dann im wärmsten Bereich von der höchsten Stelle des Wärmespeichervolumens Warmwasser entnommen wird. Wenn der Wärmespeicher einen üblichen, domförmigen Deckel aufweist, ist der Anschluß vorzugsweise im Zentrum anzubringen.

Der untere direkte Anschluß durch den Boden der Vorlauf-Beruhigungskammer ist bevorzugt als Kaltwasseranschluß für eine Solaranlage zu verwenden.

Eine weitere Funktionsverbesserung ist nach Anspruch 9 dadurch zu erreichen, daß zwischen den Vorlauf-Einströmkammer-Öffnungen und den Vorlauf-Beruhigungskammer-Öffnungen eine über den gesamten Bereich der Öffnungen längsverlaufende Strömungsverengung vorgesehen ist. Eine entsprechende Anordnung ist in den Vorlaufkammern vorzusehen. Damit wird zusätzlich zu der 180° Umlenkung über die Verengung eine weitere Beruhigung der Strömung und Vergleichmäßigung der Temperaturschichtung erreicht.

Eine solche Strömungsverengung kann über an sich bekannte Maßnahmen, beispielsweise durch einen Blechsteg herbeigeführt werden. Besonders zweckmäßig ist es jedoch nach Anspruch 10, die Strömungsverengung durch eine Verkleinerung des Wandabstandes zwischen den Wänden der Vorlauf-Einströmkammer und Vorlauf-Beruhigungskammer sowie den Wänden der Rücklauf-Einströmkammer und Rücklauf-Beruhigungskammer herbeizuführen. Eine solche Anordnung ist konstruktiv einfach zu realisieren und führt zu einer gleichmäßigen, allmählichen Strömungsverengung und anschließenden Strömungsverbreiterung, wodurch unerwünschte Turbulenzen vermieden werden.

Eine besonders vorteilhafte Ausführungsform hinsichtlich eines einfachen, kostengünstigen Aufbaus und einer optimierten Funktion wird mit den Merkmalen des Anspruchs 11 angegeben. Der Schichteinsatz besteht hier aus einem Bauteil, wobei die Vorlaufkammer und Rücklaufkammer verbunden sind. Auf einer gemeinsamen Längsmittenwand sind dazu sowohl die Vorlauf-Einströmkammer und Vorlauf-Beruhigungskammer als auch gegenüberliegend die Rücklauf-Einströmkammer und Rücklauf-Beruhigungskammer in der Form von Halbschalen angebracht. Die vertikalen Reihen der Kammeröffnungen und die Öffnungen für die Vorlauf- und Rücklaufanschlüsse sind dabei im Bereich der Längsmittenwand angeordnet. Der Schichteinsatz wird hier als einstückiges Bauteil zentral im Speicherbehälter eingesetzt, so daß davon ausgehend die Beschickung und Ladung des Speichers gleichmäßig und störungsfrei erfolgt.

Anhand einer Zeichnung werden Ausführungsbeispiele der Erfindung mit weiteren Einzelheiten, Merkmalen und Vorteilen näher erläutert.

Es zeigen:
- Fig. 1: eine perspektivische Darstellung eines Schichteinsatzes für einen Warmwasserschichtspeicher mit teilweise aufgeschnittener Vorlauf-Beruhigungskammer und Vorlauf-Einströmkammer,
- Fig. 2: eine Teildarstellung entsprechend Fig. 1 einer geschnittenen Rücklauf-Beruhigungskammer und Rücklauf-Einströmkammer,
- Fig. 3: einen Schnitt entlang der Linie A-A aus Fig. 1,
- Fig. 4: eine stirnseitige Schnittansicht einer modifizierten Ausführungsform, und
- Fig. 5: eine schematische Darstellung eines Wärmespeichers mit angeschlossenen Heizkreisen.

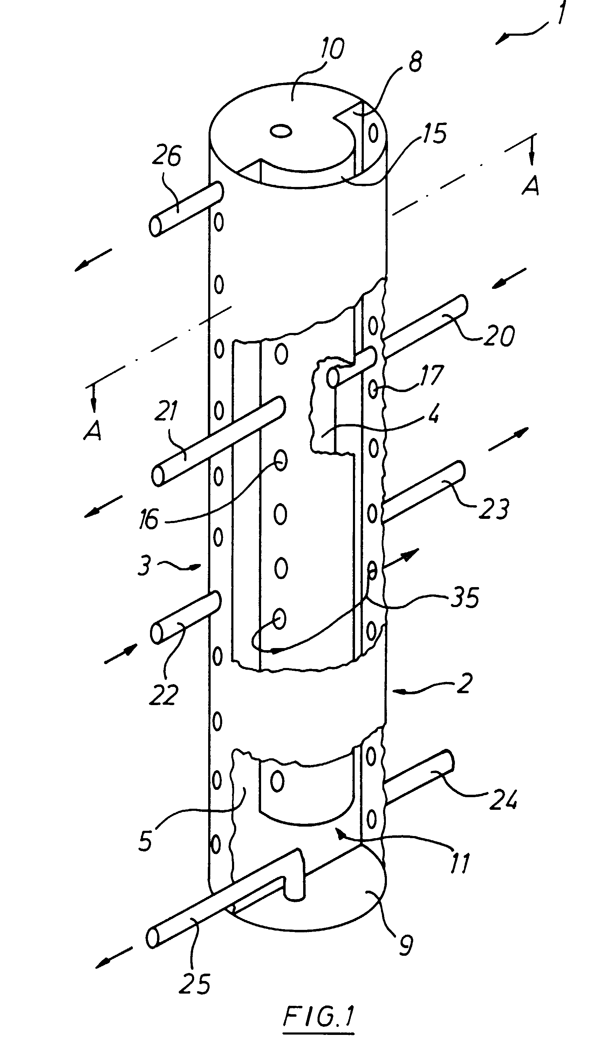

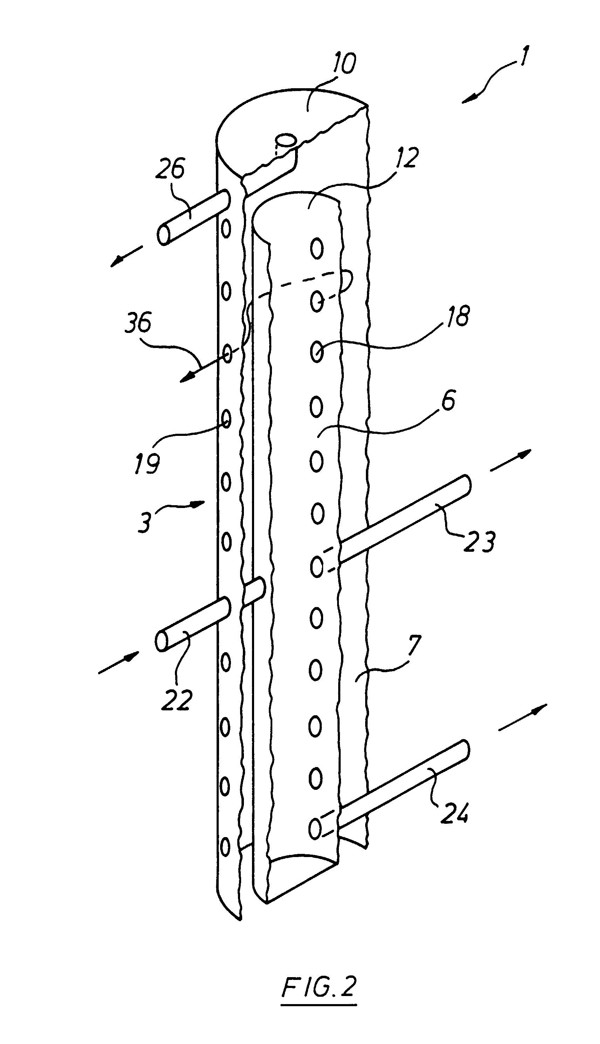

In den Fig. 1 bis 3 ist ein Schichteinsatz 1 für einen Warmwasserschichtspeicher dargestellt, der aus einer Vorlaufkammer 2 und einer Rücklaufkammer 3 besteht.

Die Vorlaufkammer ist zweigeteilt und besteht aus einer rohrförmigen Vorlauf-Einströmkammer 4 und einer diese in einem Abstand umgebende Vorlauf-Beruhigungskammer 5. Ähnlich besteht die Rücklaufkammer 3 aus einer rohrförmigen Rücklauf-Einströmkammer 6 und einer diese umgebende Rücklauf-Beruhigungskammer 7.

Der Schichteinsatz 1 ist einstückig ausgeführt, mit einer gemeinsamen Längsmittenwand 8 an der gegenüberliegend die Vorlaufkammer 2 und Rücklaufkammer 3 mit halbschaligen Wänden der Einzelkammern angebracht sind.

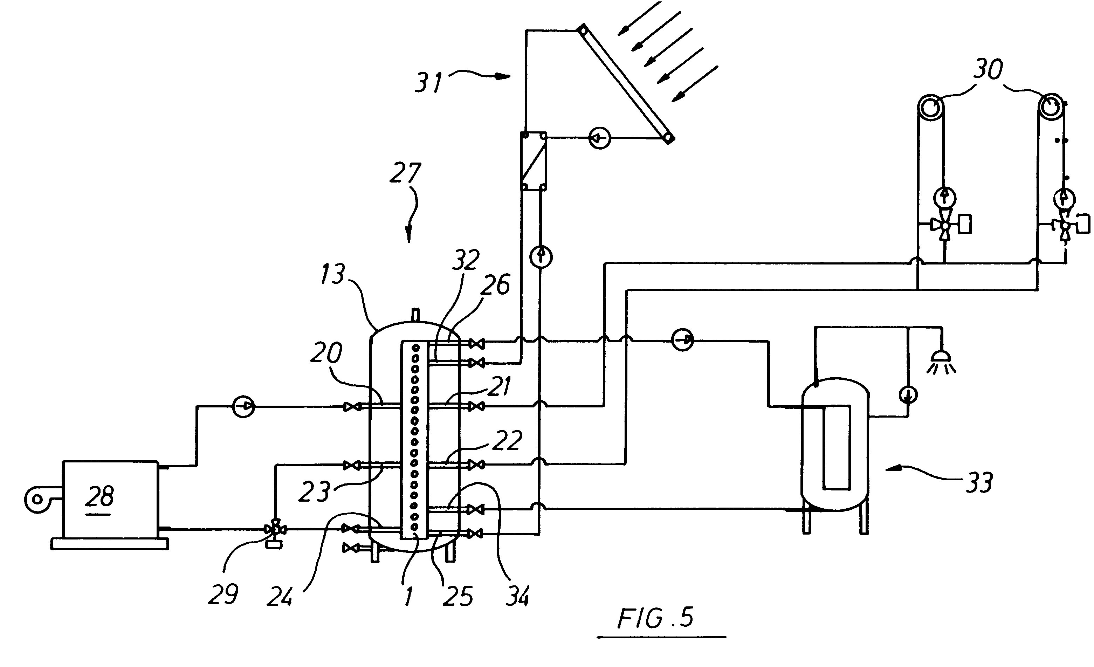

Die Vorlauf-Beruhigungskammer 5 ist an ihrer Unterseite durch einen Boden 9 und die Rücklauf-Beruhigungskammer 7 an ihrer Oberseite durch einen Deckel 10 abgeschlossen. Die Vorlauf-Einströmkammer 4 endet in einem Abstand zum Boden 9 und ist an ihrer Unterseite 11 offen. Entsprechend endet die Rücklauf-Einströmkammer 6 in einem Abstand zum Deckel 10 und ist an ihrer Oberseite 12 offen. Der Schichteinsatz 1 erstreckt sich über nahezu die gesamte Höhe eines Speicherbehälters 13 (siehe Fig. 5).

Zwischen den Wänden der jeweiligen Einströmkammern 4 bzw. 6 und den Beruhigungskammern 5 bzw. 7 ist durch entsprechende Formgebung und Verringerung des Wandabstands jeweils eine Einschnürung als Strömungsverengung 14 bzw. 15 vorgesehen.

An der Wand der Vorlauf-Einströmkammer 4 ist im Bereich der Längsmittenwand 8 eine vertikale Reihe von Vorlauf-Einströmkammer-Öffnungen 16 als Durchströmverbindung zur Vorlauf-Beruhigungskammer 5 enthalten. Gegenüberliegend um 180° versetzt ist ebenfalls eine vertikale Reihe von Vorlauf-Beruhigungskammer-Öffnungen 17 angebracht als Durchströmverbindung zum Speicherbehältervolumen. In entsprechender Anordnung sind in der Rücklaufkammer 3 Rücklauf-Einströmkammer-Öffnungen 18 und Rücklauf-Beruhigungskammer-Öffnungen 19 angebracht. Diese Öffnungen 16, 17, 18, 19 erstrecken sich über die gesamte Höhe des Schichteinsatzes 1.

In einem oberen Bereich des Schichteinsatzes 1 ist jeweils über Rohrverbindungen durch das Speichervolumen und die Vorlauf-Beruhigungskammer 5 hindurch ein Vorlauf-Eingang 20 und direkt gegenüberliegend ein Vorlauf-Ausgang 21 an der Vorlauf-Einströmkammer 4 angebracht. In einer entsprechenden Anordnung sind in einem mittleren Höhenbereich Rohre für einen Rücklauf-Eingang 22 und Rücklauf-Ausgang 23 an der Rücklauf-Einströmkammer 6 angebracht. Die Pfeile an den Rohren geben jeweils die Strömungsrichtung des Wassers an. Zusätzlich ist in einem unteren Bereich ein weiterer unterer Rücklauf-Ausgang 24 zur Rücklauf-Einströmkammer 6 angebracht.

Als direkte Verbindung zum Speicherbehältervolumen ist über eine winkelige Rohrverbindung eine Ausgangsleitung 25 durch den Boden 9 angeschlossen. Eine entsprechende Rohrleitung ist als Ausgangsleitung 26 durch den Deckel 10 angeschlossen.

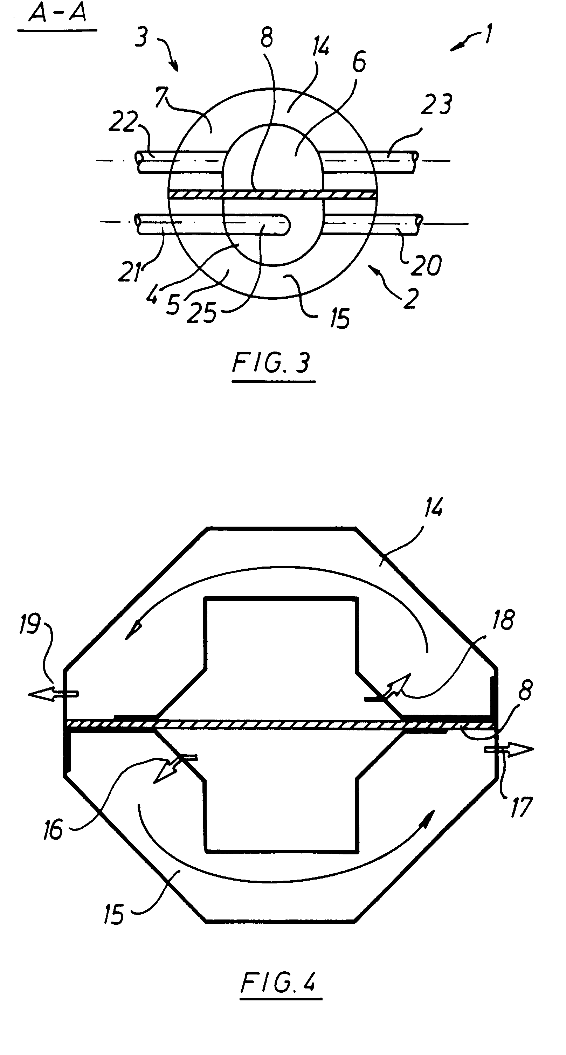

In Fig. 4 ist eine konstruktive Variante zu der Ausführung nach den Fig. 1 bis 3 dargestellt. Während in der ersten Ausführungsform die Anordnung weitgehend zylindrisch hergestellt ist, wird der Schichteinsatz gemäß Fig. 4 aus abgekanteten Blechen hergestellt. In Fig. 4 wurden der Übersichtlichkeit wegen die Anschlußrohre nicht eingezeichnet.

In der schematischen Darstellung nach Fig. 5 ist die Einbindung eines Warmwasserschichtspeichers 27 mit einem Schichteinsatz 1 in eine mögliche Ausführung einer Heizungsanlage erläutert. Ein Heizkessel 28 ist mit seinem Vorlauf an den Vorlauf-Eingang 20 und mit seinem Rücklauf über ein Drei-Wege-Ventil 29 wahlweise mit dem oberen Rücklauf-Ausgang 23 und unteren Rücklauf-Ausgang 24 verbunden. Ein Heizkreis mit zwei Heizkörpern 30 ist mit seinem Vorlauf an den Vorlauf-Ausgang 21 und mit seinem Rücklauf an den Rücklauf-Eingang 22 angeschlossen. Eine Solaranlage 31 ist am Kaltwasserzulauf mit der Ausgangsleitung 25 und mit ihrem Warmwasseranschluß über einen Eingang 32 verbunden. Dieser Eingang 32 wird zweckmäßig im oberen Bereich des Speicherbehälters angeordnet, kann jedoch auch mit dem Vorlauf-Eingang 20 zusammengeschlossen werden.

Eine Brauchwasseranlage 33 hat einerseits Verbindung mit der Ausgangsleitung 26 und mit einem Rückflußanschluß 34, der zweckmäßig im unteren Bereich angeordnet ist, jedoch auch mit dem Rücklauf-Eingang 22 zusammengeschlossen sein könnte.

Bei hohem Energieverbrauch der Heizkörper 30 und entsprechend hoher Strömung in den angeschlossenen Heizkreisen erfolgt im wesentlichen eine direkte schnelle Kurzschlußströmung vom Vorlauf-Eingang 20 zum Vorlauf-Ausgang 21 durch die Vorlauf-Einströmkammer 4 und entsprechend ein Strömungskurzschluß zwischen dem Rücklauf-Eingang 22 und dem geschalteten oberen Rücklauf-Ausgang 23 durch die Rücklauf-Einströmkammer 6. Bei weniger Energiebedarf in den Heizkörpern 30 und reduzierter Strömung wird auf den unteren Rücklaufausgang 24 umgeschaltet. Der Strömungskurzschluß wird reduziert, so daß warmes Wasser eingeschichtet wird. Dies verteilt sich in der Vorlauf-Einströmkammer 4 entsprechend seiner Temperatur und tritt in der zugeordneten Höhe an den Vorlauf-Einströmkammer-Öffnungen 16 aus. Entsprechend des eingezeichneten Pfeils 35 erfolgt eine Strömungsumlenkung um 180° über eine Strömungsverengung 15 bis zum Austritt durch die höhenzugeordneten Vorlauf-Beruhigungskammer-Öffnungen 17. Ein ähnlicher Strömungsverlauf stellt sich in der Rücklaufkammer 3 ein, wie dies mit Pfeil 36 angedeutet ist.

In der getroffenen Anschlußanordnung ist der Warmwasserschichtspeicher bevorzugt im unteren Bereich für die Ladung mit Energie aus dem Heizkessel 28 vorgesehen. Der obere Bereich wird vorzugsweise von der Solaranlage 31 beschickt und über die Brauchwasseranlage 33 entnommen. Dadurch ist eine optimierte Ausnützung der gelieferten und verbrauchten Heizenergie gewährleistet.

Zusammenfassend ist festzustellen, daß im Schichteinsatz 1 auftretende, vertikale Strömungen im wesentlichen in den Einström- und Beruhigungskammern erfolgen, bevor das Wasser in das umgebende Speichervolumen gelangt, so daß einerseits bei hohem Temperaturniveau im Speicher auch kälteres Wasser einströmen kann, ohne daß die Schichtung zerstört wird, und andererseits auch dann die Schichtung erhalten bleibt, wenn der untere Kaltwasserteil mit wärmerem Wasser beschickt wird.

## Patentansprüche

1. Warmwasserschichtspeicher, insbesondere für eine Raumheizung,
mit einem Speicherbehälter, der mit Heizungswasser als Speichermedium füllbar ist,
mit wenigstens einem Vorlauf-Eingang zum Anschluß an wenigstens einer Energiequelle, insbesondere einen Heizkessel und/oder eine Solaranlage und einem Vorlauf-Ausgang zum Anschluß an wenigstens einen Energieverbraucher, insbesondere einem Heizkreis,
mit wenigstens einem Rücklauf-Eingang zum Anschluß an den wenigstens einen Energieverbraucher, und einem Rücklauf-Ausgang zum Anschluß an die Energiequelle, und
mit einem im Speicherbehälter angeordneten Schichteinsatz zum temperaturgeschichteten Einspeisen des Warmwassers in den Speicherbehälter,
dadurch gekennzeichnet,
daß der Schichteinsatz (1) aus einer etwa vertikal angeordneten Vorlaufkammer (2) und einer etwa vertikal angeordneten Rücklaufkammer (3) besteht,
daß die Vorlaufkammer (2) aus einer rohrförmigen Vorlauf-Einströmkammer (4) und einer diese umgebende Vorlauf-Beruhigungskammer (5) besteht,
daß in der Wand zwischen Vorlauf-Einströmkammer (4) und Vorlauf-Beruhigungskammer (5) wenigstens eine vertikale Reihe von Vorlauf-Einströmkammer-Öffnungen (16) vorgesehen ist als Durchströmverbindung zur Vorlauf-Beruhigungskammer (5),
daß in der Wand zwischen Vorlauf-Beruhigungskammer (5) und Speicherbehälter (13) wenigstens eine vertikale Reihe von Vorlauf-Beruhigungskammer-Öffnungen (17) etwa gegenüberliegend zu den Vorlauf-Einströmkammer-Öffnungen (16) vorgesehen ist als Durchströmverbindung zum Speicherbehältervolumen,
daß der Vorlauf-Eingang (20) und der Vorlauf-Ausgang (21) jeweils als geschlossenes Rohr in die Vorlauf-Einströmkammer (4) geführt sind,
daß die Rücklaufkammer (3) aus einer rohrförmigen Rücklauf-Einströmkammer (6) und einer diese umgebende Rücklauf-Beruhigungskammer (7) besteht,
daß in der Wand zwischen Rücklauf-Einströmkammer (6) und Rücklauf-Beruhigungskammer (7) wenigstens eine vertikale Reihe von Rücklauf-Einströmkammer-Öffnungen (18) vorgesehen ist als Durchströmverbindung zur Rücklauf-Beruhigungskammer (7),
daß in der Wand zwischen Rücklauf-Beruhigungskammer (7) und Speicherbehälter (13) wenigstens eine vertikale Reihe von Rücklauf-Beruhigungskammer-Öffnungen (19) etwa gegenüberliegend zu den Rücklauf-Einströmkammer-Öffnungen (18) vorgesehen ist als Durchströmverbindung zum Speicherbehältervolumen und
daß der Rücklauf-Eingang (22) und der Rücklauf-Ausgang (23) jeweils als geschlossenes Rohr in die Rücklauf-Einströmkammer (6) geführt sind.

2. Warmwasserschichtspeicher nach Anspruch 1, dadurch gekennzeichnet, daß die Vorlauf-Beruhigungskammer (5) an ihrer Unterseite durch einen Boden (9) geschlossen und an ihrer Oberseite offen ist, und die Vorlauf-Einströmkammer (4) an ihrer Oberseite geschlossen ist und in einem Abstand zu diesem Boden (9) endet, wobei ihre Unterseite (11) offen ist.

3. Warmwasserschichtspeicher nach Anspruch 1 oder Anspruch 2, dadurch gekennzeichnet, daß die Rücklauf-Beruhigungskammer (7) an ihrer Oberseite durch einen Deckel (10) geschlossen und an ihrer Unterseite offen ist, und die Rücklauf-Einströmkammer (6) an ihrer Unterseite geschlossen ist und in einem Abstand zu diesem Deckel (10) endet, wobei ihre Oberseite (12) offen ist.

4. Warmwasserschichtspeicher nach einem der Ansprüche 1 bis 3, dadurch gekennzeichnet, daß sich die Vorlauf-Einströmkammer-öffnungen (16) und die Vorlauf-Beruhigungskammer-Öffnungen (17) sowie die Rücklauf-Einströmkammer-öffnungen (18) und die Rücklauf-Beruhigungskammer-Öffnungen (19) über die gesamte Höhe der Kammern (4, 5, 6, 7) erstrecken.

5. Warmwasserschichtspeicher nach einem der Ansprüche 1 bis 4, dadurch gekennzeichnet, daß sich die Vorlaufkammer (2) und die Rücklaufkammer (3) über weitgehend die gesamte Höhe des Speicherbehälters (13) erstrecken.

6. Warmwasserschichtspeicher nach einem der Ansprüche 1 bis 5, dadurch gekennzeichnet, daß der Vorlauf-Eingang (20) und der Vorlauf-Ausgang (21) an der Wand der Vorlauf-Einströmkammer (4) gegenüberliegen und der Rücklauf-Eingang (22) und der Rücklauf-Ausgang (23) an der Wand der Rücklauf-Einströmkammer (6) gegenüberliegen.

7. Warmwasserschichtspeicher nach Anspruch 6, dadurch gekennzeichnet,
daß der Vorlauf-Eingang (20) und der gegenüberliegende Vorlauf-Ausgang (21) in einem oberen Bereich der Vorlaufkammer (2) angeordnet sind,
daß der Rücklauf-Eingang (22) und der gegenüberliegende Rücklauf-Ausgang (23) in einem mittleren Höhenbereich der Rücklaufkammer (3) angeordnet sind und zudem ein weiterer Rücklauf-Ausgang (24) in einem unteren Bereich angeordnet ist.

8. Warmwasserschichtspeicher nach einem der vorhergehenden Ansprüche, dadurch gekennzeichnet
daß an einer Öffnung zum Speichervolumen im Boden (9) der Vorlauf-Beruhigungskammer (5) eine Ausgangsleitung (25) angeschlossen ist, und/oder
daß an einer Öffnung zum Speichervolumen im Deckel (10) der Rücklauf-Beruhigungskammer (7) eine Ausgangsleitung (26) angeschlossen ist.

9. Warmwasserschichtspeicher nach einem der Ansprüche 1 bis 8, dadurch gekennzeichnet, daß zwischen den Vorlauf-Einströmkammer-öffnungen (16) und den Vorlauf-Beruhigungskammer-Öffnungen (17) eine über den gesamten Bereich der Öffnungen (16, 17) längsverlaufende Strömungsverengung (15) vorgesehen ist und eine entsprechende Strömungsverengung (14) in der Rücklauf-Beruhigungskammer (7) verwendet ist.

10. Warmwasserschichtspeicher nach Anspruch 9, dadurch gekennzeichnet, daß die Srömungsverengung (14, 15) durch eine Verkleinerung des Wandabstands zwischen den Wänden der Vorlauf-Einströmkammer (4) und Vorlauf-Beruhigungskammer (5) sowie den Wänden der Rücklauf-Einströmkammer (6) und Rücklauf-Beruhigungskammer (7) erzielt wird.

11. Warmwasserschichtspeicher nach einem der Ansprüche 1 bis 10, dadurch gekennzeichnet,
daß der Schichteinsatz (1) ein Bauteil mit der Vorlaufkammer (2) und der Rücklaufkammer (3) ist,
wobei auf einer gemeinsamen Längsmittenwand (8) sowohl die Vorlauf-Einströmkammer (4) und Vorlauf-Beruhigungskammer (5) als auch gegenüberliegend die Rücklauf-Einströmkammer (6) und Rücklauf-Beruhigungskammer (7) in der Form von Halbschalen angebracht sind, wobei die vertikalen Reihen der Kammeröffnungen (16, 17, 18, 19) und die Öffnungen für die Vorlauf- und Rücklaufanschlüsse im Bereich der Längsmittenwand (8) angeordnet sind.

## Claims

1. A layered hot water storage means, for room heating in particular,
with a storage tank that can be filled with heating water as the storage medium,
with at least one forward flow intake for connection to at least one energy source, in particular a heating boiler and/or a solar installation, and a forward flow outlet for connection to at least one energy consuming device, in particular a heating circuit,
with at least one return flow intake for connection to at least one energy consuming device, and a return flow outlet for connection to the energy source, and
with a layering insert arranged in the storage tank for the feeding of the hot water into the storage tank in a temperature layered mode,
characterized in that
the layering insert (1) consists of a forward flow chamber (2) arranged approximately vertically and a return flow chamber (3) arranged approximately vertically,
that the forward flow chamber (2) consists of a tubular forward inflow chamber (4) and a forward flow settling chamber (5) surrounding it,
that in the wall between the forward inflow chamber (4) and the forward flow settling chamber (5), there is provided at least one vertical row of openings (16) of the forward inflow chamber as a through-flow connection to the forward flow settling chamber (5),
that in the wall between the forward flow settling chamber (5) and the storage tank (13), there is provided at least one vertical row of openings (17) of the forward flow settling chamber approximately opposite the openings (16) of the forward inflow chamber as a through-flow connection to the storage tank space,
that the forward flow intake (20) and the forward flow outlet (21) are each carried into the forward inflow chamber (4) as a closed pipe,
that the return flow chamber (3) consists of a tubular return inflow chamber (6) and a return flow settling chamber (7) surrounding it,
that in the wall between the return inflow chamber (6) and the return flow settling chamber (7), there is provided at least one vertical row of openings (18) of the return inflow chamber as a through-flow connection to the return flow settling chamber (7),
that In the wall between the return flow settling chamber (7) and the storage tank (13), there is provided at least one vertical row of openings (19) of the return flow settling chamber approximately opposite the openings (18) of the return inflow chamber as a through-flow connection to the storage tank space, and
that the return intake (22) and the return outlet (23) are each carried into the return inflow chamber (6) as a closed pipe.

2. A layered hot water storage means according to claim 1, characterized in that the forward flow settling chamber (5) is closed at its bottom side by a bottom (9) and is open at its top, and the forward inflow chamber (4) is closed at its top and ends at a distance from this bottom (9), its bottom side (11) being open.

3. A layered hot water storage means according to claim 1 or claim 2, characterized in that the return flow settling chamber (7) is closed at its top by a lid (10) and is open at its bottom side, and the return inflow chamber (6) is closed at its bottom side and ends at a distance from this lid (10), its top (12) being open.

4. A layered hot water storage means according to one of claims 1 to 3, characterized in that the openings (16) of the forward inflow chamber and the openings (17) of the forward flow settling chamber, as well as the openings (18) of the return inflow chamber and the openings (19) of the return flow settling chamber, extend over the whole height of the chambers (4, 5, 6, 7).

5. A layered hot water storage means according to one of claims 1 to 4, characterized in that the forward flow chamber (2) and the return flow chamber (3) extend largely over the whole height of the storage tank (13).

6. A layered hot water storage means according to one of claims 1 to 5, characterized in that the forward flow intake (20) and the forward flow outlet (21) lie opposite each other on the wall of the forward inflow chamber (4), and the return flow intake (22) and the return flow outlet (23) lie opposite each other on the wall of the return inflow chamber (6).

7. A layered hot water storage means according to claim 6, characterized in that
the forward flow intake (20) and the opposed forward flow outlet (21) are arranged in an upper zone of the forward flow chamber (2),
that the return flow intake (22) and the opposed return flow outlet (23) are arranged in a median vertical zone of the return flow chamber (3), and
that, moreover, a further return flow outlet (24) is arranged in a lower zone.

8. A layered hot water storage means according to one of the preceding claims, characterized in that
an outlet line (25) is connected at an opening to the storage space in the bottom (9) of the forward flow settling chamber (5), and/or
that an outlet line (26) is connected at an opening to the storage space in the lid (10) of the return flow settling chamber (7).

9. A layered hot water storage means according to one of claims 1 to 8, characterized in that between the openings (16) of the forward inflow chamber and the openings (17) of the forward flow settling chamber, there is provided a flow constriction (15) extending in the longitudinal direction over the whole zone of the openings (16, 17), and a corresponding flow constriction (14) is used in the return flow settling chamber (7).

10. A layered hot water storage means according to claim 9, characterized in that the flow constriction (14, 15) is obtained by a reduction of the wall interspacing between the walls of the forward inflow chamber (4) and the forward flow settling chamber (5), as well as the walls of the return inflow chamber (6) and return flow settling chamber (7).

11. A layered hot water storage means according to one of claims 1 to 10, characterized in that
the layering insert (1) forms one component together with the forward flow chamber (2) and the return flow chamber (3),
wherein both the forward inflow chamber (4) and the forward flow settling chamber (5) and, opposed thereto, the return inflow chamber (6) and the return flow settling chamber (7) are arranged on a common longitudinal median partition (8) in the form of half shells, wherein the vertical rows of the chamber openings (16, 17, 18, 19) and the openings for the forward flow and return flow connections are arranged in the zone of the longitudinal median partition (8).

## Revendications

1. Accumulateur d'eau chaude en couches, en particulier pour un chauffage de locaux, comportant:
un réservoir d'accumulation, qui peut être rempli d'eau de chauffage constituant le fluide d'accumulation,
au moins une entrée dans le sens aller, destinée à être raccordée à au moins une source d'énergie, en particulier à une chaudière et/ou une installation solaire, et une sortie dans le sens aller, destinée à être raccordée à au moins un dissipateur d'énergie, en particulier à un circuit de chauffage,
au moins une entrée dans le sens du retour, destinée à être raccordée au(x) dissipateur(s) d'énergie, et une sortie dans le sens du retour destinée à être raccordée à la source d'énergie, et
un accessoire de formation de couches disposé dans le réservoir d'accumulation, pour assurer une introduction de l'eau chaude en couches de température dans le réservoir d'accumulation,
caractérisé
en ce que l'accessoire de formation de couches (1) est constitué d'une chambre (2) dans le sens aller, disposée à peu près verticalement, et d'une chambre (3) dans le sens du retour disposée à peu près verticalement,
en ce que la chambre (2) dans le sens aller est constituée d'une chambre (4) d'admission d'écoulement dans le sens aller, de forme tubulaire, et d'une chambre (5) de tranquilisation dans le sens aller entourant la précédente,
en ce que, dans la paroi située entre la chambre (4) d'admission d'écoulement dans le sens aller et la chambre (5) de tranquilisation dans le sens aller, il est prévu au moins une rangée verticale d'ouvertures (16) de la chambre d'admission d'écoulement dans le sens aller, constituant une communication pour le passage de l'écoulement en direction de la chambre (5) de tranquilisation dans le sens aller,
en ce que, dans la paroi située entre la chambre (5) de tranquilisation dans le sens aller et le réservoir d'accumulation (13), il est prévu, dans des positions sensiblement opposées aux ouvertures (16) de la chambre d'admission d'écoulement dans le sens aller, au moins une rangée verticale d'ouvertures (17) de la chambre de tranquilisation dans le sens aller, constituant une communication pour le passage de l'écoulement en direction du volume intérieur du réservoir d'accumulation,
en ce que l'entrée (20) dans le sens aller et la sortie (21) dans le sens aller sont dirigées chacune, sous la forme d'un tube fermé, dans la chambre (4) d'admission d'écoulement dans le sens aller,
en ce que la chambre (3) dans le sens du retour est constituée d'une chambre (6) d'admission d'écoulement dans le sens du retour, de forme tubulaire, et d'une chambre (7) de tranquilisation dans le sens du retour entourant la précédente,
en ce que, dans la paroi située entre la chambre (6) d'admission d'écoulement dans le sens du retour et la chambre (7) de tranquilisation dans le sens du retour, il est prévu au moins une rangée verticale d'ouvertures (18) de la chambre d'admission d'écoulement dans le sens du retour, constituant une communication pour le passage de l'écoulement en direction de la cambre (7) de tranquilisation dans le sens du retour,
en ce que, dans la paroi située entre la chambre (7) de tranquilisation dans le sens du retour et le réservoir d'accumulation (13), il est prévu, dans des positions sensiblement opposées aux ouvertures (18) de la chambre d'admission d'écoulement dans le sens du retour, au moins une rangée verticale d'ouvertures (19) de la chambre de tranquilisation dans le sens du retour, constituant une communication pour le passage de l'écoulement en direction du volume intérieur du réservoir d'accumulation, et
en ce que l'entrée (22) dans le sens du retour et la sortie (23) dans le sens du retour sont dirigées chacune, sous forme d'un tube fermé, dans la chambre (6) d'admission d'écoulement dans le sens du retour.

2. Accumulateur d'eau chaude en couches selon la revendication 1, caractérisé en ce que la chambre (5) de tranquilisation dans le sens aller est fermée par un fond (9) au niveau de sa face inférieure et est ouverte au niveau de sa face supérieure, et la chambre (4) d'admission d'écoulement dans le sens aller est fermée au niveau de sa face supérieure et se termine à distance de ce fond (9), sa face inférieure (11) étant ouverte.

3. Accumulateur d'eau chaude en couches selon la revendication 1 ou la revendication 2, caractérisé en ce que la chambre (7) de tranquilisation dans le sens du retour est fermée par un couvercle (10) au niveau de sa face supérieure et est ouverte au niveau de sa face inférieure, et la chambre (6) d'admission d'écoulement dans le sens du retour est fermée au niveau de sa face inférieure et se termine à distance de ce couvercle (10), sa face supérieure (12) étant ouverte.

4. Accumulateur d'eau chaude en couches selon l'une des revendications 1 à 3, caractérisé en ce que les ouvertures (16) de la chambre d'admission d'écoulement dans le sens aller et les ouvertures (17) de la chambre de tranquilisation dans le sens aller, ainsi que les ouvertures (18) de la chambre d'admission d'écoulement dans le sens du retour et les ouvertures (19) de la chambre de tranquilisation dans le sens du retour, s'étendent sur la hauteur entière des chambres (4, 5, 6, 7).

5. Accumulateur d'eau chaude en couches selon l'une des revendications 1 à 4, caractérisé en ce que la chambre (2) dans le sens aller et la chambre (3) dans le sens du retour s'étendent sur la majeure partie de la hauteur entière du réservoir d'accumulation (13).

6. Accumulateur d'eau chaude en couches selon l'une des revendications 1 à 5, caractérisé en ce que l'entrée (20) dans le sens aller et la sortie (21) dans le sens aller sont situées l'une en face de l'autre sur la paroi de la chambre (4) d'admission d'écoulement dans le sens aller, et l'entrée (22) dans le sens du retour et la sortie (23) dans le sens du retour sont situées l'une en face de l'autre sur la paroi de la chambre (6) d'admission d'écoulement dans le sens du retour.

7. Accumulateur d'eau chaude en couches selon la revendication 6, caractérisé
en ce que l'entrée (20) dans le sens aller et la sortie (21) dans le sens aller, située en face de cette dernière, sont disposées dans une partie supérieure de la chambre (2) dans le sens aller,
en ce que l'entrée (22) dans le sens du retour et la sortie (23) dans le sens du retour, située en face de cette dernière, sont disposées dans une partie située à mi-hauteur de la chambre (3) dans le sens du retour et une sortie supplémentaire (24) dans le sens du retour est en outre disposée dans une partie inférieure.

8. Accumulateur d'eau chaude en couches selon l'une des revendications précédentes, caractérisé
en ce qu'un conduit de sortie (25) est raccordé à une ouverture conduisant au volume intérieur de l'accumulateur, ménagée dans le fond (9) de la chambre (5) de tranquilisation dans le sens aller, et/ou
en ce qu'un conduit de sortie (26) est raccordé à une ouverture conduisant au volume intérieur de l'accumulateur, ménagée dans le couvercle (10) de la chambre (7) de tranquilisation dans le sens du retour.

9. Accumulateur d'eau chaude en couches selon l'une des revendications 1 à 8, caractérisé en ce que, entre les ouvertures (16) de la chambre d'admission d'écoulement dans le sens aller et les ouvertures (17) de la chambre de tranquilisation dans le sens aller, il est prévu un rétrécissement de section d'écoulement (15) s'étendant longitudinalement sur la région entière des ouvertures (16, 17), et un rétrécissement correspondant de section d'écoulement (14) est utilisé dans la chambre (7) de tranquilisation dans le sens du retour.

10. Accumulateur d'eau chaude en couches selon la revendication 9, caractérisé en ce que le rétrécissement de section d'écoulement (14, 15) est obtenu par une diminution de l'écartement entre les parois de la chambre (4) d'admission d'écoulement dans le sens aller et de la chambre (5) de tranquilisation dans le sens aller, ainsi qu'entre les parois de la chambre (6) d'admission d'écoulement dans le sens du retour et de la chambre (7) de tranquilisation dans le sens du retour.

11. Accumulateur d'eau chaude en couches selon l'une des revendications 1 à 10, caractérisé
en ce que l'accessoire de formation de couches (1) est un élément de construction comportant la chambre (2) dans le sens aller et la chambre (3) dans le sens du retour,
la chambre (4) d'admission d'écoulement dans le sens aller et la chambre (5) de tranquilisation dans le sens aller aussi bien que la chambre (6) d'admission d'écoulement dans le sens du retour et la chambre (7) de tranquilisation dans le sens du retour, placées en vis-à-vis des précédentes, étant alors réalisées sous la forme de demi-coques sur une paroi médiane longitudinale commune (8), les rangées verticales des ouvertures (16, 17, 18, 19) des chambres et les ouvertures pour les raccords dans le sens aller et dans le sens du retour étant disposées au voisinage de la paroi médiane longitudinale (8).
